Europäisches Patentamt

European Patent Office

Office européen des brevets

(11) Veröffentlichungsnummer: **0 403 043**
A1

## (12) EUROPÄISCHE PATENTANMELDUNG

(21) Anmeldenummer: 90250151.9

(22) Anmeldetag: 11.06.90

(51) Int. Cl.5: **B21D 43/26, B21B 39/02**

(30) Priorität: 16.06.89 DE 3920173

(43) Veröffentlichungstag der Anmeldung:
19.12.90 Patentblatt 90/51

(84) Benannte Vertragsstaaten:
DE FR GB IT

(71) Anmelder: MANNESMANN Aktiengesellschaft
Mannesmannufer 2
D-4000 Düsseldorf 1(DE)

(72) Erfinder: Müller, Manfred
Oberrather Strasse 64
D-4000 Düsseldorf 30(DE)
Erfinder: Hinz, Jürgen
Markgrafenstrasse 31
D-4000 Düsseldorf 11(DE)

(74) Vertreter: Meissner, Peter E., Dipl.-Ing. et al
Patentanwaltsbüro Meissner & Meissner,
Herbertstrasse 22
D-1000 Berlin 33(DE)

(54) Vorrichtung für die Genaulängenfertigung von langgestreckten Werkstücken.

(57) Die Erfindung betrifft eine verbesserte Vorrichtung für die Genaulängenfertigung von langgestreckten, über einen Rollgang der Teilanlage zugeführten Werkstücke zu schaffen, die unabhängig von der Masse und der Geschwindigkeit der zugeführten Werkstücke eine genaue und reproduzierbare Abländgung der Werkstücke ermöglicht und die einfach und schnell auf unterschiedliche vorgegebene Teilungslängen eingestellt werden kann, wird vorgeschlagen, daß der Längenanschlag eine in den Rollgang schwenkbare Haltevorrichtung (1) aufweist, die mit einer in Längsrichtung des Rollganges verschiebbaren Rahmenkonstruktion (11) gelenkig (10) verbunden ist und an der der in Längsrichtung des Rollganges liegende Stoßdämpfer (7) und ein parallel dazu liegendes an einem Ende mit einer Steuerplatte (31) und am anderen Ende mit der Anschlagplatte (2) verbundenes Führungselement angeordnet und die Rahmenkonstruktion (11) abschnittsweise und die Haltevorrichtung (1) unabhängig davon feinabgestuft verschiebbar sind und an der Haltevorrichtung (1) ein parallel zum Führungselement liegender beidseitig sowohl auf die Anschlagplatte (2) als auch die Steuerplatte (31) wirkender, hydraulisch verschiebbarer Stößel (8) angeordnet ist, dessen Längserstreckung geringer ist als der Abstand zwischen Anschlag(2)- und Steuerplatte (31) und der regelungstechnisch mit dem Stoßdämpfer (7) gekoppelt ist.

Fig.1

EP 0 403 043 A1

## Vorrichtung für die Genaulängenfertigung von langgestreckten Werkstücken

Die Erfindung betrifft eine Vorrichtung für die Genaulängenfertigung von langgestreckten Werkstücken gemäß dem Gattungsbegriff des Hauptanspruches.

Im Bereich der metallverarbeitenden Industrie ist es erforderlich, im Zuge der Herstellung und Weiterverarbeitung von Halbzeug, langgestreckte Werkstücke, sei es Profile, Rohre oder Stangen abzulängen oder zu teilen. Das Ablängen oder Teilen kann durch Abstechen, Sägen oder Trennen erfolgen. Für entsprechende Anwendungsfälle ist es erforderlich, daß die vorgegebene abzutrennende Länge in möglichst engen Grenzen reproduzierbar eingehalten wird. Dabei tritt die Schwierigkeit auf, daß die üblicherweise über einen Rollgang der Teilanlage zugeführten langgestreckten Werkstücke an einem am Rollgang angeordneten Anschlag abgebremst und anschließend in bezug auf die Schnittkante möglichst genau positioniert werden müssen. Eine der Möglichkeiten zur Lösung des Problems ist, eine mit einer Anschlagplatte und einem als Puffer wirkenden Stoßdämpfer aufweisenden Längenanschlag im Bereich des Rollganges anzuordnen. Zur Anpassung an unterschiedliche Längenvorgaben ist der Längenanschlag verschiebbar angeordnet, der für den leichteren Abtransport der geschnittenen Längen auch aus dem Rollgang geklappt oder geschwenkt werden kann. Der an dem Längenanschlag angeordnete handelsübliche Industrie- Stoßdämpfer (siehe Prospekt der Fa. ACE Stoßdämpfer GmbH 6.85) muß die gesamte kinetische Energie der an die Anschlagplatte auftreffenden bewegten Massen vernichten und anschließend die Werkstücke in die vorgegebene Teilungsposition schieben. Der Nachteil dieser Ausführung liegt aber darin, daß der Bremsweg des Stoßdämpfers durch die unterschiedlichen Massen und Rollgangsgeschwindigkeiten immer verschieden ist und die Teilungsposition mittels des Stoßdämpfers aufgrund seiner Dämpfungs- und Entspannungscharakteristik nicht immer genau erreicht wird. Je nach Bauausführung erfolgt die Rückstellung des Bremsweges des Stoßdämpfers durch eine Rückholfeder oder durch eine Luft-Öltank-Steuerung, die direkt am Stoßdämpfer angeordnet ist. Eine Positionierung auf Genaulänge ist mit dieser Art der Rückstellung nicht möglich, da die Rückstellkräfte nur für einen ganz eng begrenzten Gewichtsbereich optimal eingestellt werden können und für größere abzubremsende Massen die Rückstellkräfte nicht ausreichen und für kleinere abzubremsende Massen diese durch die zu starken Rückstellkräfte nach vorn geschleudert werden.

Aufgabe der Erfindung ist es, eine verbesserte Vorrichtung für die Genaulängenfertigung von langgestreckten, über einen Rollgang der Teilanlage zugeführten Werkstücke zu schaffen, die unabhängig von der Masse und der Geschwindigkeit der zugeführten Werkstücke eine genaue und reproduzierbare Ablängung der Werkstücke ermöglicht und die einfach und schnell auf unterschiedliche vorgegebene Teilungslängen eingestellt werden kann.

Diese Aufgabe wird mit den mit imkennzeichnenden Teil des Anspruches 1 angegebenen Merkmalen gelöst. Vorzugsweise Ausgestaltungen ergeben sich aus den Unteransprüchen.

Bei der erfindungsgemäßen Vorrichtung ist auf einer Haltevorrichtung parallel zum bereits bekannten, mit der Anschlagplatte zusammenwirkenden Stoßdämpfer ein beidseitig arbeitender und hydraulisch antreibbarer Stößel angeordnet, der regelungstechnisch mit dem Stoßdämpfer gekoppelt ist. Außerdem weist die Haltevorrichtung noch ein sie in axialer Richtung durchdringendes Führungselement, zum Beispiel eine zylindrische Stange auf, das mit einem Ende mit der Anschlagplatte verbunden ist. Am gegenüberliegenden Ende des Führungselementes ist eine Steuerplatte befestigt, wobei der Abstand zwischen der Anschlag- und der Steuerplatte größer ist als die Längserstreckung des Stößels und die Differenz dem einfachen Hub des Stößels entspricht. Die Haltevorrichtung ist schwenkbar an einer parallel zum Rollgang verfahrbaren Rahmenkonstruktion angeordnet. Außerdem ist der Verfahrweg der Rahmenkonstruktion und die mit ihr über die Haltevorrichtung verbundene Anschlagplatte in groben Stufen sowie zwischen den Stufen mittels der in der Rahmenkonstruktion verschiebbaren Haltevorrichtung feinabgestuft einstellbar.

Der Vorteil dieser Anordnung ist darin zu sehen, daß durch eine regelungstechnische Koppelung von Stoßdämpfer und Stößel die kinetische Energie des herangeführten Werkstückes vernichtet und das Werkstück unabhängig von seinem Gewicht und seiner Zuführgeschwindigkeit genau in die Teilungsposition verfahren wird. Die regelungstechnische Koppelung geschieht in der Weise, daß unabhängig vom tatsächlichen Bremsweg des Stoßdämpfers infolge unterschiedlich auftreffender Massen dieser durch den Stößel immer bis in seine Endlage eingefahren und durch eine geregelte Verschiebung des Stößels gezielt entlastet wird. Damit wird ein Vorschnellen des wie eine Feder gespannten Stoßdämpfers verhindert, der die Werkstücke in eine nicht definierte Lage zur Schnittkante schieben würde. Die Verschiebung des direkt an bzw. unmittelbar vor der Anschlagplatte leigenden Werkstückes in die Teilungsposition erfolgt durch den Stößel bei gleichzeitiger Entlastung des Stoßdämpfers.

Damit im Falle drehender Werkstücke, z. B. bei Abstechbänken die Anschlagplatte bzw. die Stirnfläche des Werkstückes nicht beschädigt wird, wird nach dem Festspannen des Werkstückes die Anschlagplatte mittels des Stößels zurückgefahren und die Haltevorrichtung aus dem Rollgang geschwenkt. Die letztere Maßnahme hat außerdem den Sinn, einen ungehinderten Abtransport der geschnittenen Werkstücke zu ermöglichen.

Für die Einstellung der Anschlagplatte auf den vorgegebenen Abstand zum Trennwerkzeug, sei es Säge, Drehstahl oder Trennscheibe ist, wie bereits erwähnt, eine Grob- und Feineinstellung vorgesehen. Die Grobeinstellung erfolgt in der Weise, daß die Rahmenkonstruktion sich über Räder auf parallel zum Rollgang liegende Schienen, die auf einem Tragrahmen angeordnet sind, abstützt. Damit die Rahmenkonstruktion und die mit ihr verbundene Haltevorrichtung verschoben werden kann, ist am Tragrahmen eine parallel zum Rollgang liegende Zahnstange angeordnet, in die ein an der Rahmenkonstruktion angeordnetes und gelagertes Ritzel eingreift. Das Ritzel kann über ein mit einem Kegelrad verbundenes Handrad oder über einen entsprechenden Stellmotor angetrieben werden, so daß die Rahmenkonstruktion entlang der Schiene vor- und zurückverschoben werden kann. Zur Arretierung der Rahmenkonstruktion werden zwei darauf angeordnete, hydraulisch verfahrbare Kolben in konische Bohrungen gedrückt, die auf dem darunterliegenden Tragrahmen angebracht sind.

Für die Feineinstellung weist die Rahmenkonstruktion zwei im Abstand voneinander und parallel zum Rollgang liegende Holme auf, auf der zwei quer dazu liegende und mit der Haltervorrichtung gelenkig verbundene Traversen verschiebbar angeordnet sind und eine in der Rahmenkonstruktion parallel zu den Holmen gelagerte Spindel in eine an einer Traverse befestigte Mutter eingreift. Die Spindel kann in einfacher Weise durch ein mit ihr verbundenes Handrad oder durch einen Stellmotor bewegt werden.

Damit die Kräfte, die beim Auftreffen der zugeführten Werkstücke auf die Anschlagplatte auftreten, möglichst gleichmäßig verteilt werden, besteht das Führungselement der Haltevorrichtung aus zwei parallel zueinander liegenden Stangen, wobei der Stoßdämpfer und der Stößel übereinander liegend mittig zwischen den beiden Führungsstangen angeordnet sind und die Achse des Stoßdämpfers und die der beiden Führungsstangen in einer gemeinsamen Ebene liegen. Zur Vermeidung des Auftretens von Kippmomenten wird der Abstand der Führungsstangen bzw. des Stoßdämpfers zum Rollgang so gewählt, daß die Mittelachse des Werkstückes möglichst mit der Achse des Stoßdämpfers fluchtet bzw. die Abweichung nur gering ist. Der Rollgang kann dazu hyraulisch angehoben bzw. abgesenkt werden.

In der Zeichnung wird anhand eines Ausführungsbeispieles die erfindungsgemäße Vorrichtung näher erläutert. Es zeigen:

Figur 1 eine Seitenansicht der Vorrichtung

Figur 2 einen Ausschnitt einer Draufsicht der Vorrichtung

Figur 3 einen Schnitt entlang der Linie A-A in Fig. 1

Fig. 4a-d einen schematischen Teilausschnitt der Darstellung in Fig. 2 mit einer Abfolge des Abbremsens und Einfahrens des Werkstückes in die Teilungsposition

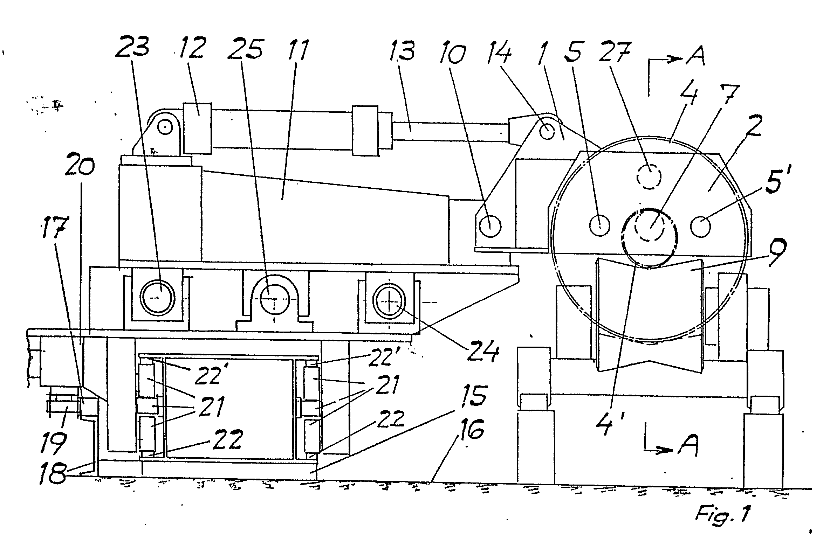

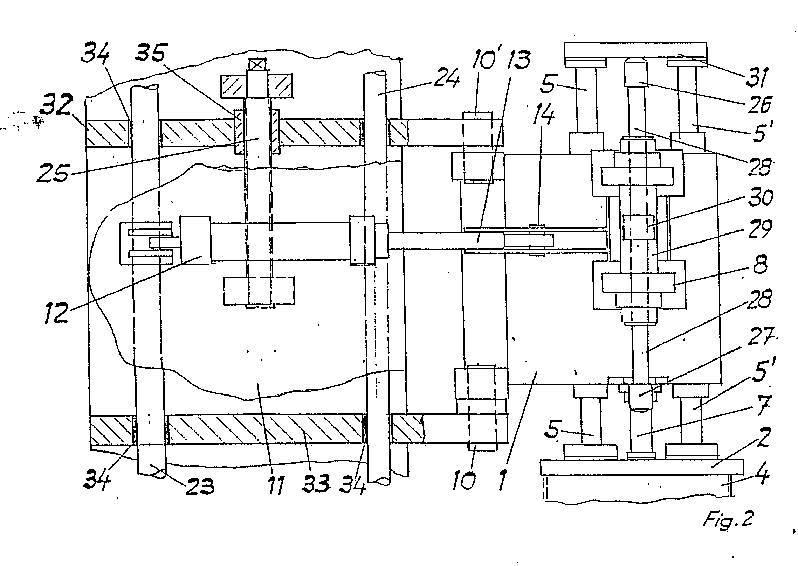

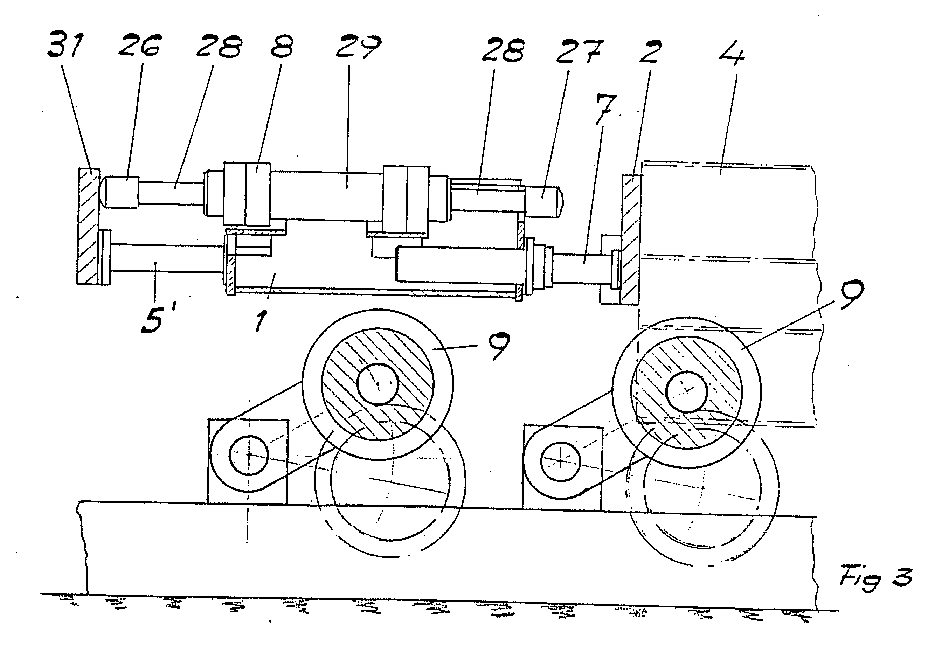

In Figur 1 ist eine Seitenansicht der Vorrichtung dargestellt, wobei auf die Wiedergabe eines Teiles maschinentechnischer Einzelheiten verzichtet wurde. Auf einer Haltevorrichtung 1 ist stirnseitig eine Anschlagplatte 2 angeordnet, auf die das über einen Rollgang herangeführte abzulängende Werkstück aufprallt. In diesem Beispiel wird das Werkstück durch zwei, einen unterschiedlichen Durchmesser aufweisende Rohre 4,4' symbolisiert. Es könnte aber ebensogut ein quadratischer oder rechteckiger Walzstab oder ein vergleichbares langgestrecktes Werkstück sein. Die Anschlagplatte 2 ist mit zwei parallel leigenden Führungsstangen 5, 5' verbunden. Der Stoßdämpfer 7, dessen Achse auf derselben Ebene liegt wie die der beiden Führungsstangen 5, 5' ist mit der Haltevorrichtung 1 verbunden. Oberhalb des Stoßdämpfers 7 befindet sich ein Stößel 8 (Fig. 2), dessen Kopfende 27 im Erstreckungsbereich der Anschlagplatte 2 liegt. Um keine Kippmomente zu erzeugen, sind die Rollen 9 des Rollganges schwenkbar angeordnet (siehe Fig. 3), damit die Achse des anschlagenden Rohres 3, 4' möglichst mit der Achse des Stoßdämpfers 7 fluchtet. Die Haltevorrichtung 1 ist über ein Gelenk 10, 10' mit einer Rahmenkonstruktion 11 verbunden und kann damit aus dem Rollgangsbereich geklappt werden. Das Herausklappen der Haltevorrichtung 1 aus dem Bereich des Rollganges erfolgt durch eine auf der Rahmenkonstruktion 11 angeordnete Kolben-Zylindereinheit 12, deren Kolbenstange 13 angelenkt 14 mit der Haltevorrichtung 1 verbunden ist. Die Rahmenkonstruktion 11, die parallel zum Rollgang verfahrbar ist, stützt sich auf einem Tragrahmen 15 ab. Eine Zahnstange 17 ist auf einem Träger 18 befestigt, der an dem Tragrahmen 15 angeordnet ist und sich auf dem Fundament 16 abstützt. In die Zahnstange 17 greift ein Ritzel 19 ein, das über ein an der Unterseite der Rahmenkonstruktion 11 befestigtes Kegelradgetriebe 20 mit einem hier nicht dargestellten Handrad antreibbar ist. Die Verschiebung der Rahmenkonstruktion 11 erfolgt über Räder 21, die auf parallel zum Rollgang liegenden Schienen 22, 22' laufen.

Mit dieser Verfahrmöglichkeit erfolgt die Grobeinstellung der Vorrichtung in bezug auf die vorgegebene Schnittlänge des abzulängenden Werkstückes. Unabhängig davon kann als Feineinstellung die Rahmenkonstruktion 11 mittels zweier Holme 23,24 in sich über Gleitlager 34 verschoben werden. Dazu ist zwischen beiden Holmen 23,24 eine Spindel 25 angeordnet, die in einer an einer Traverse 32 befestigten Mutter 35 eingreift. Die Spindel 25 ist über ein hier nicht dargestelltes Handrad oder mittels Stellmotor drehbar auf der Rahmenkonstruktion 11 gelagert, die wiederum gelenkig 10, 10' mit der Haltevorrichtung 1 verbunden ist.

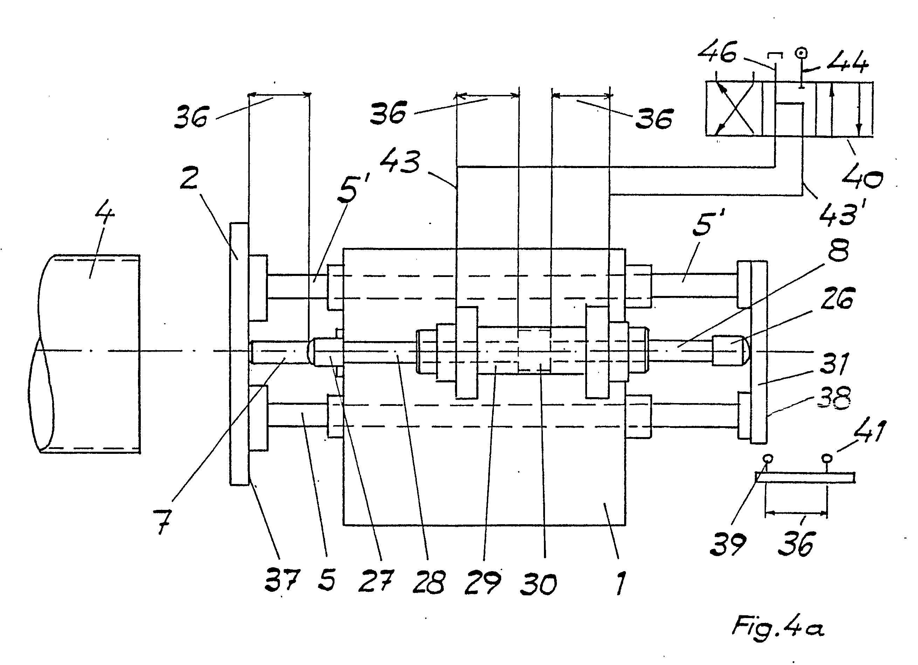

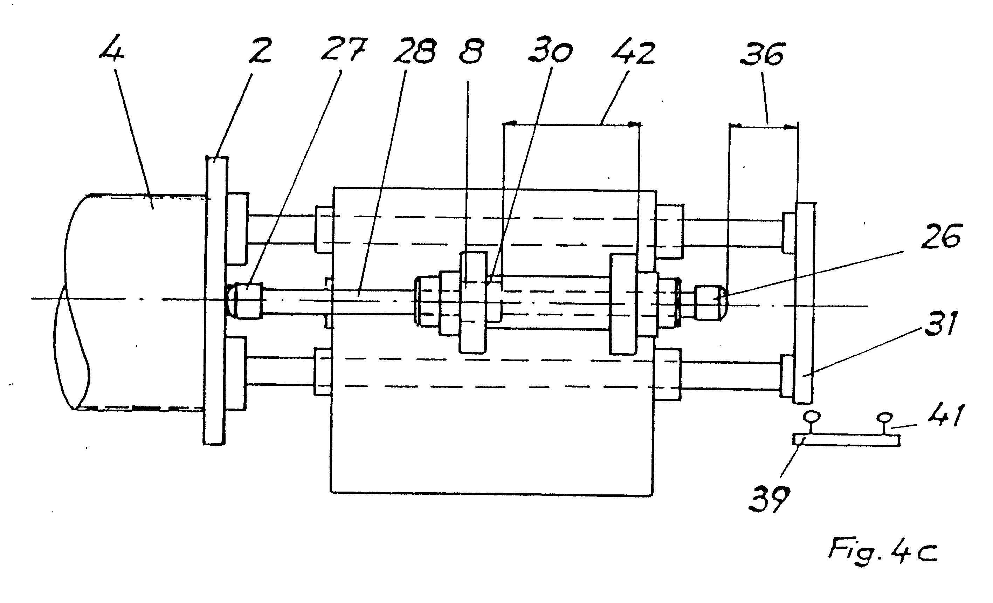

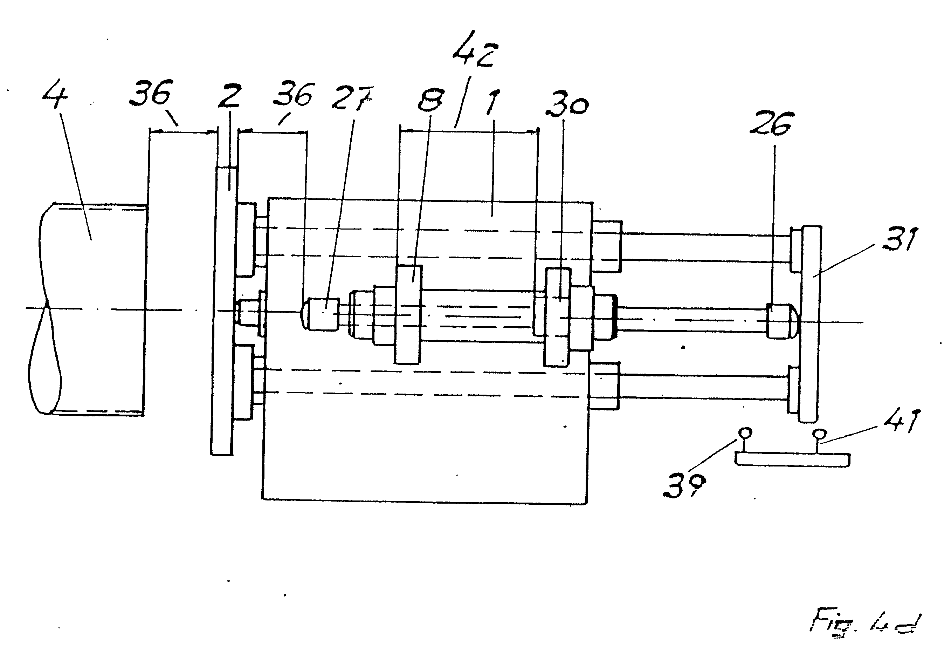

Figur 2 zeigt einen Ausschnitt einer Draufsicht der erfindungsgemäßen Vorrichtung, in der die Verschiebung der Rahmenkonstruktion 11 besser zu erkennen ist. Die Führungsstangen 5, 5' sind mit ihren dem heranrollenden Rohr 4 zugewandten Ende fest mit der Anschlagplatte 2 verbunden. Der Stoßdämpfer 7, der in derselben vertikalen Ebene liegt wie der Stößel 8, ist fest an der Haltevorrichtung 1 angeflanscht. Der Stößel 8 weist zwei gleich ausgebildete Kopfenden 26,27 auf, die am jeweiligen Ende einer durchgehenden Kolbenstange 28 angeordnet sind. Der Zylinder 29 umschließt einen doppelt wirkenden Kolben 30, der fest mit der durchgehenden Kolbenstange 28 verbunden ist. Die dem Werkstück gegenüberliegenden Enden der Führungsstangen 5, 5' sind fest mit einer Steuerplatte 31 verbunden, in deren Erstreckungsbereich auch das kopfseitige Ende 26 des Stößels 8 liegt. Auf das Zusammenwirken des Stößels 8 mit dem Stoßdämpfer 7 und der Anschlag2- sowie der Steuerplatte 31 wird bei der Erläuterung der Figuren 4a bis 4d näher eingegangen.

Figur 3 ist ein Schnitt entlang der Linie A-A in Figur 1. In dieser Figur ist die Höhenverstellung des Rollganges deutlich zu erkennen. Wie bereits schon ausgeführt, soll durch das Heben bzw. Absenken der Rollen 9 erreicht werden, daß die Mittelachse des Rohres 4 möglichst mit der Achse des Stoßdämpfers 7 fluchtet. Dadurch wird die Erzeugung eines Kippmomentes vermieden. Diese Figur zeigt auch den Unterschied der Längserstreckung des Stößels 8 im Vergleich zum Abstand zwischen der Anschlagplatte 2 und der Steuerplatte 31. Die beiden Führungsstangen 5, 5' erstrecken sich durch die Haltevorrichtung 1 und bilden eine starre Verbindung zwischen Anschlagplatte 2 und Steuerplatte 31. Der Stoßdämpfer 7 ist an der Haltevorrichtung 1 angeflanscht, wobei die Stirnfläche des Kolbens des Stoßdämpfers 7 in jeder Stellung an der Innenseite 37 (Fig. 4a) der Anschlagplatte 2 zur Anlage kommt, ohne mit der Anschlagplatte 2 verbunden zu sein.

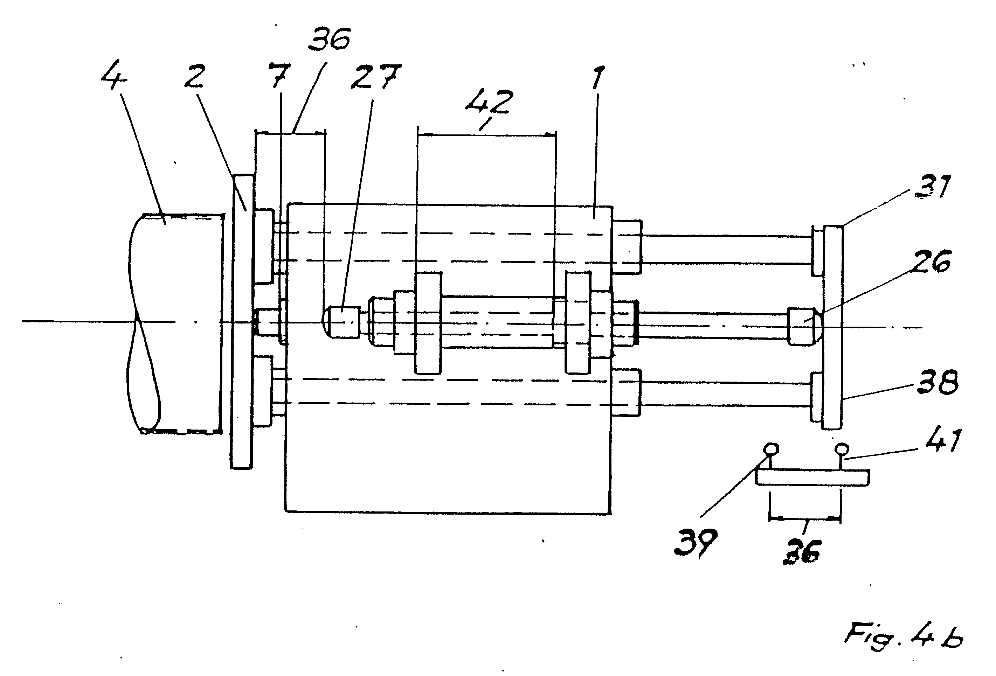

In den Figuren 4a bis 4d ist anhand eines Teilausschnittes der Darstellung in Fig. 2 die Abfolge für das Abbremsen und das Positionieren des Werkstückes näher erläutert. Von links kommend wird beispielsweise ein Rohr 4 auf dem hier nicht dargestellten Rollgang transportiert, wobei es im nächsten Moment auf die Anschlagplatte 2 aufschlägt. In dieser Phase befindet sich der Kolben 30 des Stößels 8 in Mittelstellung, und zwar jeweils um eine Hublänge 36 vom Ende des Zylinders 29 entfernt. In gleicher Weise ist das dem Rohr 4 zugewandte Kopfende 27 des Stößels 8 um eine Hublänge 36 von der Innenseite 37 der Anschlagplatte 2 entfernt. In dieser Stellung ist der Stoßdämpfer 7 entlastet. Nach dem Aufschlag des Rohres 4 wird der Stoßdämpfer 7 um eine Wegstrecke X eingedrückt und damit der Aufprall abgebremst. Bei dieser Bewegung überstreicht die äußere Kante 38 der Steuerplatte 31 den berührungslosen Endschalter 39 und das drei Schaltstellungen aufweisende 4-Wegeventil 40, das in der hier nicht dargestellten Hydraulikanlage angeordnet ist, wird betätigt. Dabei wird die zur linken Kammer des Zylinders 29 führende Leitung 43 mit der Druckleitung 44 und die zur rechten Kammer führende Leitung 43' mit der zum Öltank führenden Leitung 46 verbunden. Dadurch bewegt sich der Kolben 30 nach rechts und damit auch der Stößel 8. Mittels des Kopfendes 26 des Stößels 8, der gegen die Steuerplatte 31 drückt, wird der Stoßdämpfer 7 unabhängig von der Aufprallenergie und den davon abhängigen Bremsweg vollständig in seine Endlage eingeschoben. Das Rohr 4 bleibt, je nachdem wie die beim Aufprall entstandenen Schwingungen abklingen, im unmittelbaren Kontakt mit der Aufprallseite der Anschlagplatte 2 oder in einem geringen Abstand dazu auf dem Rollgang liegen. Im Abstand einer Hublänge 36 ist der zweite berührungslose Endschalter 41 angeordnet. Dieser wird betätigt, sobald die äußere Kante 38 der Steuerplatte 31 die entsprechende Wegstrecke zurückgelegt hat (s. Figur 4b). Nach Einschalten eines Zeitrelais wird durch Betätigung des 4-Wegeventils 40 die Zuleitung 43' mit der Druckleitung 44 und die Zuleitung 43 mit der abführenden Leitung 46 verbunden und der Stößel 8 nach links mit einer vorgegebenen Geschwindigkeit gefahren, so daß der Stoßdämpfer 7 geregelt entlastet wird und nicht federartig nach vorne schnellen kann.

Nach der teilweisen Entlastung des Stoßdämpfers 7 würde die Anschlagplatte 2 in einer undefinierten Stellung stehen bleiben und damit das angestrebte Ziel einer exakten Teilungsposition nicht erreicht werden. Aus diesem Grunde wird wie Figur 4c zeigt, der Stößel 8 ganz nach links gefahren, wobei das Kopfende 27 die Anschlagplatte 2 nach vorne schiebt und damit auch das davor liegende Rohr 4. Da der Rückfahrweg des Kolbens 30 genau dem doppelten Hub 42 entspricht, ist damit die Positionierung des Rohres 4 exakt festgelegt.

In dieser Stellung gemäß Fig. 4c wird das Rohr 4 gespannt und nach nochmaligem Umschalten des 4-Wegeventils wird gemäß Figur 4d durch den Stößel 8 mittels des Kopfendes 26 die Steuerplatte 31 und damit auch die Anschlagplatte 2 nach rechts gedrückt, so daß die Anschlagplatte 2 keinen Kontakt mehr zum Rohr 4 hat. Nunmehr kann die gesamte Haltevorrichtung 1, wie schon in den Figuren 1 bis 3 näher erläutert, aus dem Rollgangsbereich geklappt werden, so daß die abgeschnittene Rohrlänge ungehindert abtransportiert werden kann.

Die Ausgangsstellung gemäß Fig. 4a wird dadurch erreicht, daß das 4-Wegeventil 40 auf Stellung drucklos geschaltet wird und der vorgespannte Stoßdämpfer 7 die Anschlagplatte 2 nach links schiebt, bis der Kolben 30 seine Mittelstellung erreicht hat.

**Ansprüche**

1. Vorrichtung für die Genaulängenfertigung von langgestreckten, über einen Rollgang einer Teilanlage zugeführten Werkstücken mit einer Haltevorrichtung, an der eine Anschlagplatte und ein als Puffer wirkender Stoßdämpfer angeordnet und die zum Schwenken in den Bereich des Rollganges mit einer in Längsrichtung des Rollganges verschiebbaren Rahmenkonstruktion gelenkig verbunden ist,
**dadurch gekennzeichnet,**
daß an der Haltevorrichtung (1) der in Längsrichtung des Rollganges liegende Stoßdämpfer (7) und ein parallel dazu liegendes an einem Ende mit einer Steuerplatte (31) und am anderen Ende mit der Anschlagplatte (2) verbundenes Führungselement angeordnet und die Rahmenkonstruktion (11) abschnittsweise und die Haltevorrichtung (1) unabhängig davon feinabgestuft verschiebbar sind und an der Haltevorrichtung (1) ein parallel zum Führungselement liegender beidseitig sowohl auf die Anschlagplatte (2) als auch die Steuerplatte (31) wirkender, hydraulisch verschiebbarer Stößel (8) angeordnet ist, dessen Längserstreckung geringer ist als der Abstand zwischen Anschlag(2)- und Steuerplatte (31) und der regelungstechnisch mit dem Stoßdämpfer (7) gekoppelt ist.
2. Vorrichtung nach Anspruch 1,
**dadurch gekennzeichnet,**
daß die Haltevorrichtung (1) gelenkig (14) mit der Kolbenstange (13) einer an der Rahmenkonstruktion (11) angeordneten und quer zum Rollgang liegenden Kolben-Zylindereinheit (12) verbunden ist.
3. Vorrichtung nach Anspruch 1,
**dadurch gekennzeichnet,**
daß die Rahmenkonstruktion (11) sich über Räder (21) auf parallel zum Rollgang liegenden Schienen (22, 22′), die auf einem Tragrahmen (15) angeordnet sind, abstützt.
4. Vorrichtung nach Anspruch 1,
**dadurch gekennzeichnet,**
daß am Tragrahmen (15) eine parallel zum Rollgang liegende Zahnstange (17) angeordnet ist, in die ein an der Rahmenkonstruktion (11) angeordnetes und gelagertes Ritzel (19) eingreift.
5. Vorrichtung nach Anspruch 1,
**dadurch gekennzeichnet,**
daß die Rahmenkonstruktion (11) zwei im Abstand voneinander und parallel zum Rollgang liegende Holme (23,24) aufweist, auf der zwei quer dazu liegende und mit der Haltevorrichtung (1) gelenkig verbundene Traversen (32,33) verschiebbar angeordnet sind und eine in der Rahmenkonstruktion (11) parallel zu den Holmen (23,24) gelagerte Spindel (25) in eine an einer Traverse (32) befestigte Mutter (35) eingreift.
6. Vorrichtung nach Anspruch 1,
**dadurch gekennzeichnet,**
daß das Führungselement der Haltervorrichtung (1) aus zwei parallel zueinander liegenden Führungsstangen (5, 5′) besteht und der Stoßdämpfer (7) und der Stößel (8) übereinanderliegend mittig zwischen den beiden Führungsstangen (5, 5′) angeordnet sind, wobei die Achse des Stoßdämpfers (7) und die der Führungsstangen (5,5′) in einer gemeinsamen Ebene liegen.

Fig. 1

Fig.2

EP 0 403 043 A1

Fig 3

Fig.4a

EP 0 403 043 A1

Fig. 4b

4   2   27   28   8   30   42   36

26

31

41

39

Fig. 4c

EP 0 403 043 A1

Fig. 4d

EP 0 403 043 A1

## EINSCHLÄGIGE DOKUMENTE

EP 90250151.9

| Kategorie | Kennzeichnung des Dokuments mit Angabe, soweit erforderlich. der maßgeblichen Teile | Betrifft Anspruch | KLASSIFIKATION DER ANMELDUNG (Int CI⁵) |
|---|---|---|---|
| A | DE - A1 - 3 022 031 (KRÜCKELS) * Seite 12, 2. und 3. Absatz; Seite 14, letzter Absatz; Fig. 3,4 * | 1,4 | B 21 D 43/26 B 21 B 39/02 |
| A | DE - A1 - 3 025 320 (ISHIHARA et al.) * Anspruch 2; Seite 10, Zeilen 28-31 * | 1,5,6 | |
| A | DE - A1 - 3 418 120 (MANNESMANN AG) * Anspruch 1; Fig. 4 * | 2 | |

**RECHERCHIERTE SACHGEBIETE (Int CI⁵)**

B 21 D 43/00
B 21 B 39/00
B 21 B 43/00
B 65 G 47/00
F 16 F  9/00

Der vorliegende Recherchenbericht wurde für alle Patentansprüche erstellt.

| Recherchenort | Abschlußdatum der Recherche | Prüfer |
|---|---|---|
| WIEN | 01-10-1990 | BISTRICH |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82